(19) Europäisches Patentamt
European Patent Office
Office européen des brevets

(11) **EP 1 488 294 B1**

(12) **FASCICULE DE BREVET EUROPEEN**

(45) Date de publication et mention
de la délivrance du brevet:
**11.02.2009 Bulletin 2009/07**

(21) Numéro de dépôt: **03744961.8**

(22) Date de dépôt: **19.03.2003**

(51) Int Cl.:
***G05B 19/42*** *(2006.01)*

(86) Numéro de dépôt international:
**PCT/IB2003/001124**

(87) Numéro de publication internationale:
**WO 2003/081358 (02.10.2003 Gazette 2003/40)**

(54) **PROCEDE DE COMMANDE D'UN VOLET ROULANT OU SIMILAIRE**

VERFAHREN ZUR STEUERUNG EINER WALZENBLENDE ODER ÄHNLICHEM

METHOD OF CONTROLLING A ROLLER BLIND OR SIMILAR

(84) Etats contractants désignés:
**AT BE BG CH CY CZ DE DK EE ES FI FR GB GR HU IE IT LI LU MC NL PT RO SE SI SK TR**

(30) Priorité: **25.03.2002 FR 0203668**

(43) Date de publication de la demande:
**22.12.2004 Bulletin 2004/52**

(73) Titulaire: **Somfy SAS**
**74300 Cluses (FR)**

(72) Inventeurs:
 • **MAISTRE, Valérie**
 **F-74300 Thyez (FR)**
 • **DESBIOLLES, Claude**
 **F-74800 Eteaux (FR)**
 • **HUBAULT, Alain**
 **F-74300 Magland (FR)**
 • **MERCIER, Patrick**
 **F-74970 Marignier (FR)**

(74) Mandataire: **Bugnion Genève**
**Bugnion S.A.**
**Conseils en Propriété Industrielle**
**Case Postale 375**
**1211 Genève 12 (CH)**

(56) Documents cités:
**EP-A- 0 426 577          EP-A- 0 574 637**
**US-A- 5 449 987**

**EP 1 488 294 B1**

**Description**

L'invention se rapporte au domaine des commandes de moteurs destinés à la manoeuvre de dispositifs de protection solaire, d'occultation ou de fermeture, entre deux positions extrêmes. L'invention concerne plus particulièrement un procédé de détermination d'une position intermédiaire dans un système de commande et un procédé de commande d'un actionneur permettant le déplacement d'un dispositif de protection solaire, d'occultation ou de fermeture, entre deux positions extrêmes. L'invention a encore pour objet un dispositif de commande d'un actionneur permettant le déplacement d'un dispositif de protection solaire, d'occultation ou de fermeture, dans une position intermédiaire entre deux positions extrêmes, comprenant un algorithme utilisant des données enregistrées dans des mémoires pour calculer cette position intermédiaire.

Il est connu dans les produits cités de protection solaire, d'occultation ou de fermeture, de déterminer une position intermédiaire, dite de confort, qui peut être enregistrée par l'installateur ou l'utilisateur. Un premier exemple est celui d'un store de façade. En situation de travail sur écran d'ordinateur, l'utilisateur souhaitera bien souvent que le produit ne descende que jusqu'à une hauteur déterminée, le protégeant du soleil direct. En absence d'un système complexe d'asservissement à la hauteur du soleil, une position intermédiaire de déploiement, définie par l'utilisateur, pourra satisfaire l'essentiel des situations de confort, la position de déploiement complet étant apte à se protéger au-delà de la position intermédiaire.

Il en est de même dans le cas d'un store à lames inclinables. La position de confort représente alors typiquement le tiers supérieur ou la moitié supérieure de la fermeture totale.

Dans le cas d'un volet roulant à lames ajourées, la position de confort est plutôt celle de la position « ajours », c'est à dire une position où le tablier du volet est globalement déployé, les lames restant écartées les unes des autres. Une telle situation permet d'assurer l'intimité dans la pièce tout en permettant sa ventilation si les fenêtres restent entrouvertes. Cette position correspond typiquement à 80-90 % de la fermeture totale. Dans tous les cas, la position de confort dépend donc non seulement de la nature du produit, mais aussi de la manière dont celui-ci est utilisé.

On comprend donc qu'il n'ait jamais été imaginé de livrer des produits comportant une position intermédiaire prédéfinie par le constructeur.

Le brevet EP 0 426 577 décrit précisément les moyens d'enregistrer une telle position intermédiaire, et d'exécuter un ordre destiné à amener le produit dans une telle position. Dans ce brevet, un capteur permet de repérer la position du tube d'enroulement entraîné par l'actionneur. Dans tous les cas, c'est à l'installateur ou à l'utilisateur de procéder au premier enregistrement d'une position intermédiaire. Cet enregistrement est réalisé à l'aide d'un moyen de commutation comportant des boutons de commande.

Le brevet EP 0 574 637 décrit des modes d'enregistrement et d'exécution de commande, relatifs à un actionneur sans capteur de position et permettant d'atteindre une position intermédiaire. C'est alors la durée de manoeuvre qui est prise en considération. Une position intermédiaire s'exprime donc en pourcentage de la course totale entre les deux positions extrêmes. Notons que cette position intermédiaire n'est pas enregistrée. Il s'agit en fait d'une position de consigne, affichée sur un index par un bouton de commande.

De tels dispositifs de protection solaire, d'occultation ou de fermeture, pouvant prendre une position intermédiaire entre deux positions extrêmes présentent un inconvénient. En effet, la position intermédiaire de confort doit obligatoirement être réglée soit par l'installateur, soit par l'utilisateur. Et, si ce réglage n'est pas fait l'utilisateur risque d'ignorer l'existence de cette fonction d'ouverture en position intermédiaire.

L'invention a pour but un procédé palliant les inconvénients cités, améliorant les procédés connus de l'art antérieur et permettant de déterminer une position intermédiaire dans un système de commande d'un actionneur permettant le déplacement d'un dispositif de protection solaire, d'occultation ou de fermeture, entre deux positions extrêmes. En particulier, l'invention propose un procédé ainsi qu'un dispositif de commande permettant d'amener un dispositif de protection solaire, d'occultation ou de fermeture, dans une position intermédiaire entre deux positions extrêmes, sans qu'aucun réglage préalable ne soit nécessaire. De tels procédé et dispositif de commande permettent une démonstration instantanée de la fonction « ouverture en position intermédiaire ».

Le procédé de détermination d'une position intermédiaire dans un système de commande d'un actionneur permettant le déplacement d'un dispositif de protection solaire, d'occultation ou de fermeture, entre deux positions extrêmes, est caractérisé par la partie caractérisante de la revendication 1.

Le procédé de commande d'un actionneur permettant le déplacement d'un dispositif de protection solaire, d'occultation ou de fermeture, dans une position intermédiaire entre deux positions extrêmes, est caractérisé par la partie caractérisante de la revendication 2.

Différents modes d'exécution des procédés précédents sont définis par les revendications dépendantes 3 à 7.

Le dispositif de commande objet de l'invention est défini par la revendication indépendante 8.

Un mode de réalisation particulier du dispositif est défini par la revendication dépendante 9.

Le dessin annexé, représente à titre d'exemples, deux modes d'exécution du procédé de commande selon l'invention.

La figure 1 est un schéma du dispositif de commande selon l'invention.

La figure 2 est un ordinogramme d'un premier mode d'exécution du procédé de commande selon l'invention.

La figure 3 est un ordinogramme d'un second mode d'exécution du procédé de commande selon l'invention.

La figure 4 est un ordinogramme d'un procédé de commande utilisant une unité de commande simplifiée.

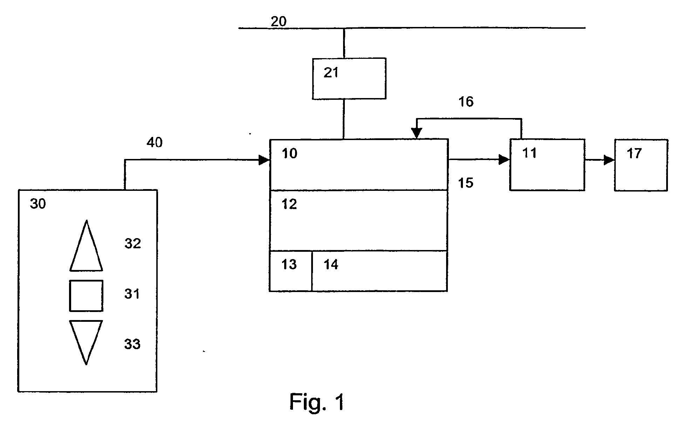

Comme représenté à la figure 1, l'unité de contrôle 10 d'un actionneur 11 contient un processeur permettant l'exécution de programmes contenus dans la mémoire 12. L'ensemble est alimenté à partir d'une source électrique 20 via un convertisseur 21. L'actionneur 11 entraîne l'élément de fermeture ou d'occultation 17. Connu de l'homme du métier, le détail des connexions électriques et des relais de puissance n'est pas représenté. On signale par la flèche 15 la faculté de l'unité de contrôle 10 d'agir sur l'actionneur 11, et par la flèche 16 les informations de retour, notamment si l'actionneur 11 est équipé d'un capteur de position. Une zone mémoire 13 est affectée au stockage d'une donnée relative à une première position intermédiaire. Une zone mémoire 14 est affectée au stockage d'un programme d'exploitation de cette donnée pour déterminer une première position intermédiaire.

Par ailleurs, une unité de commande 30 comprend des moyens de contrôle représentés ici par trois boutons 31, 32 et 33. Le bouton 31 active un contact donnant l'ordre à l'élément de fermeture ou d'occultation 17 de se rendre en position intermédiaire. Le bouton 32 active un contact lui donnant un ordre de montée, le bouton 33 active un contact lui donnant un ordre de descente.

Une combinaison de ces boutons 31, 32 et 33, ou un appui prolongé sur l'un d'eux, permet de faire entrer l'unité de contrôle 10 dans un mode d'apprentissage.

La liaison 40 entre l'unité de commande 30 et l'unité de contrôle est représentée par une flèche. Il peut s'agir d'une liaison filaire, ou sans fil, par exemple une liaison radio ou une liaison infra-rouge. Elle peut être également bidirectionnelle, l'unité de commande 30 comportant des voyants ou un écran permettant d'accuser réception des ordres émis.

L'unité de contrôle 10 peut être physiquement séparée de l'actionneur 11 ou intégrée à celui-ci dans un même ensemble mécanique, sans que cela ait une incidence sur le principe de l'invention.

Un appui sur le bouton 31 provoque la mise en marche de l'actionneur 11 et, par conséquent, le déplacement de l'élément de fermeture ou d'occultation 17 jusqu'à atteindre la position intermédiaire. Cette position intermédiaire est prédéfinie par l'enregistrement dans la zone mémoire 13 au cours du cycle de fabrication ou de distribution du dispositif et avant son installation sur site, d'une donnée dite de position intermédiaire, exploitée par un algorithme d'initialisation contenu dans la zone mémoire 14.

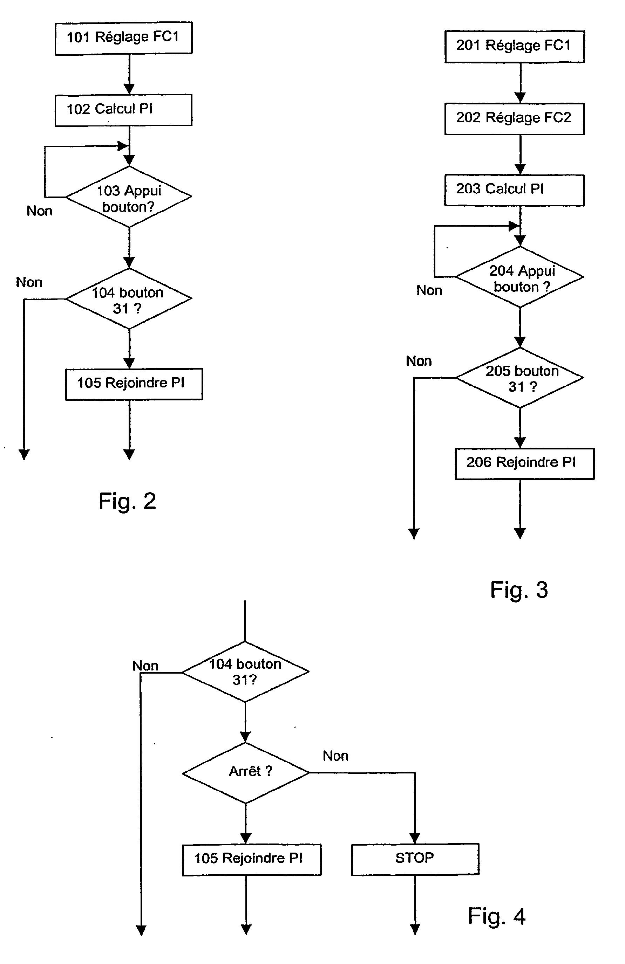

Selon un premier mode d'exécution, représenté à la figure 2, la procédure d'exécution d'une commande d'aller en position intermédiaire est exécutable dès qu'au moins une position de référence a été enregistrée. Notons que, comme il est connu de l'art antérieur, cet enregistrement peut résulter soit d'une commande particulière d'enregistrement, émise par l'installateur lorsque l'élément entraîné a été placé dans une telle position de référence, soit, de préférence, d'une séquence d'apprentissage automatique, notamment lorsque l'élément entraîné est astreint à se déplacer entre des butées. Dans le premier cas, la position de référence est déterminée par l'installateur, dans le deuxième cas la position de référence est détectée de manière automatique.

Pour ce faire, on active l'actionneur 11 jusqu'à ce qu'on détecte une fin de course FC1. Cette détection peut se faire par tout moyen connu, tel un moyen électrique ou mécanique de détection de couple résistant. On enregistre ensuite cette position de fin de course FC1. Le bloc 101 représente cet enregistrement. Il s'agit par exemple, de manière connue, d'enregistrer l'état d'un compteur à incrémentation - décrémentation relié à des capteurs de déplacement du tube d'enroulement entraîné par l'actionneur.

Dès cette position de référence FC1 déterminée, il est possible de définir la position intermédiaire PI grâce à l'algorithme de calcul. Le bloc 102 représente cet algorithme de calcul de la position intermédiaire PI, à partir de la position de référence FC1 précédente et de la donnée de position intermédiaire DPI enregistrée dans la zone mémoire 13.

Par exemple, s'il a été convenu que la donnée de position intermédiaire DPI représente simplement le décalage par rapport à la fin de course, l'algorithme de calcul de la position intermédiaire PI, contenu dans la zone mémoire 14 s'écrit simplement :

$$PI = FC1 + DPI$$

Bien entendu, le décalage pourrait également être calculé lui-même à partir de la donnée DPI, par exemple égal à 2xDPI ou 4xDPI.

Dès le calcul de la position intermédiaire PI effectué, celle-ci est disponible pour une commande. Le bloc 103 représente un test d'attente d'action sur un bouton de commande 31, 32 et 33. Si une telle action est effectuée, le bloc 104 teste s'il s'agit d'un appui sur le bouton de position intermédiaire 31. Si tel est le cas, le bloc 105 active l'actionneur 11 et, par conséquent, l'élément de fermeture ou d'occultation 17 jusqu'à atteindre la position intermédiaire PI. Pour permettre à l'élément de fermeture ou d'occultation 17 de venir en position intermédiaire PI, l'actionneur 11 est ou non muni de capteurs de position de l'arbre d'enroulement de l'élément de fermeture ou d'occultation 17. S'il en est muni, la donnée de position intermédiaire DPI correspond à une donnée de position. S'il n'en est pas muni, la donnée de position intermédiaire DPI correspond à une donnée de durée de fonctionnement de l'actionneur 11 depuis la position de fin de course FC1. Dans ce cas, la position intermédiaire PI n'est accessible qu'à partir de la position de fin de course FC1.

Selon un second mode d'exécution, représenté à la figure 3, la procédure d'exécution d'une commande d'aller en position intermédiaire est exécutable dès que deux positions de référence ont été enregistrées, positions correspondant ici aux fins de course FC1 et FC2 de l'élément de fermeture ou d'occultation. Notons que, comme il est connu de l'art antérieur, cet enregistrement peut résulter d'une séquence d'apprentissage automatique, notamment lorsque l'élément entraîné est astreint à se déplacer entre des butées.

Pour ce faire, on active l'actionneur 11 jusqu'à ce qu'on détecte la fin de course FC1. On enregistre ensuite cette position de fin de course FC1. Le bloc 201 représente cet enregistrement. On active l'actionneur 11 dans l'autre sens jusqu'à ce qu'on détecte l'autre fin de course FC2. On enregistre ensuite cette position de fin de course FC2. Le bloc 202 représente cet enregistrement. Les détections de fin de course peuvent se faire par tout moyen connu, tel un moyen électrique ou mécanique de détection de couple résistant.

Notons que si la position de fin de course FC1 sert de position de référence, il n'est pas indispensable d'enregistrer la position de fin de course FC2 en tant que telle mais au moins la valeur de la course (FC2 - FC1). Cet enregistrement est fait soit à partir des valeurs d'un compteur de rotation, soit à partir de la durée du mouvement.

Dès ces positions de référence déterminées, il est possible de définir la position intermédiaire PI grâce à l'algorithme de calcul. Le bloc 203 représente cet algorithme de calcul de la position intermédiaire PI à partir des positions de référence précédentes FC1, FC2 et de la donnée de position intermédiaire DPI enregistrée dans la zone mémoire 13.Cette donnée de position intermédiaire représente cette fois un pourcentage de la course. L'algorithme de calcul de la position intermédiaire PI, contenu dans la mémoire 14 s'écrit alors :

$$PI = FC1 + DPI \times (FC2 - FC1)$$

Bien entendu, le décalage pourrait également être calculé de manière plus complexe à partir de la donnée de position intermédiaire DPI, ou encore en lisant la donnée de position intermédiaire DPI dans une table mémorisée, l'adresse de lecture dans cette table étant déterminée à partir de la course (FC2 - FC1).

Dès calcul de la position intermédiaire PI, celle-ci est disponible pour une commande. Le bloc 204 représente un test d'attente d'action sur un bouton de commande 31, 32 et 33. Si une telle action est effectuée, le bloc 205 teste s'il s'agit d'un appui sur le bouton de position intermédiaire 31. Si tel est le cas, le bloc 206 active l'actionneur 11 et, par conséquent, l'élément de fermeture ou d'occultation 17 jusqu'à atteindre la position intermédiaire PI. Pour permettre à l'élément de fermeture ou d'occultation 17 de venir en position intermédiaire PI, l'actionneur 11 est ou non muni de capteurs de position de l'arbre d'enroulement de l'élément de fermeture ou d'occultation 17. S'il en est muni, la donnée de position intermédiaire DPI correspond à une donnée de position. S'il n'en est pas muni, la donnée de position intermédiaire DPI correspond à une donnée de durée de fonctionnement de l'actionneur 11 depuis une des positions de fin de course FC1 ou FC2. Dans ce cas, la position intermédiaire PI n'est accessible qu'à partir de l'une ou l'autre des positions de fin de course FC1 ou FC2.

Dans les descriptions qui viennent d'être faites, le calcul de la position intermédiaire PI est fait immédiatement après détermination d'au moins une position de référence telle qu'une position de fin de course. On reste bien entendu dans le cadre de l'invention si d'autres réglages préliminaires sont intercalés dans ce processus. De même, il est possible de prévoir l'application de l'algorithme de calcul de la position intermédiaire lors de chaque manoeuvre d'aller en position intermédiaire.

Enfin, l'utilisateur ou l'installateur conserve, comme dans l'art antérieur, la possibilité de mémoriser une position personnalisée. Cette mémorisation agit, de manière préférée, directement par écrasement du résultat de position intermédiaire PI issu de l'algorithme d'initialisation contenu dans la zone mémoire 14.

Si pour une raison quelconque on est amené à complètement réinitialiser l'unité de traitement, par exemple à l'aide d'un bouton de remise à zéro ou encore à partir d'une action prédéterminée sur la tension d'alimentation, c'est donc la valeur de position intermédiaire « constructeur », prédéterminée, qui sera de nouveau active, et non celle de l'utilisateur.

Cet aspect de mémorisation d'une valeur sur site est suffisamment décrit dans l'état de la technique.

Notons que l'invention sera plus facilement mise en oeuvre par l'utilisation d'un procédé de commande apte à réduire le nombre de boutons sur le boîtier de commande et à en faciliter la compréhension. A cet effet, il est commode que les dispositifs précédents soient mis en oeuvre au moyen d'un clavier à trois boutons, le bouton de position intermédiaire 31 ayant une double fonctionnalité : commander d'aller en position intermédiaire, lorsqu'il n'y a pas de mouvement en cours, et commander l'arrêt, lorsqu'il y a un mouvement en cours. La figure 4 présente un ordinogramme détaillant les tests d'appui sur le bouton de position intermédiaire illustrant cette double fonction du bouton.

Ainsi, l'invention facilite doublement l'usage de la fonction d'accès à une position intermédiaire, d'une part par des moyens qui rendent cette fonction utilisable, au moins de manière non optimale, sans recours à un réglage sur site, et d'autre part par un procédé de commande adapté à une bonne compréhension d'un nombre de boutons limités.

## Revendications

1.  Procédé de détermination d'une position intermédiaire (PI) dans un système de commande d'un actionneur (11) permettant le déplacement d'un dispositif de protection solaire, d'occultation ou de fermeture (17), entre deux positions extrêmes, comprenant les étapes suivantes :

    - activer au moins une fois l'actionneur (11) pour détecter et/ou déterminer une, respectivement des positions de référence (FC1, FC2) du dispositif (17) et enregistrer dans des mémoires cette, respectivement ces positions de référence (FC1, FC2),
    - calculer la position intermédiaire (PI) grâce à un algorithme utilisant la, respectivement les positions de référence (FC1, FC2) précédemment enregistrées et une donnée de position intermédiaire (DPI),
    - enregistrer la position intermédiaire PI dans une mémoire dite de position intermédiaire,

    caractérisé en ce que la donnée de position intermédiaire (DPI) est enregistrée dans une mémoire (13) avant l'installation.

2.  Procédé de détermination selon la revendication précédente, caractérisé en ce la donnée de position intermédiaire est enregistrée au cours du cycle de fabrication ou de distribution du dispositif et avant son installation sur site.

3.  Procédé de commande d'un actionneur (11) permettant le déplacement d'un dispositif de protection solaire, d'occultation ou de fermeture (17), dans une position intermédiaire (PI) entre deux positions extrêmes, caractérisé en ce qu'il comprend les étapes suivantes :

    - mettre en oeuvre le procédé de détermination selon la revendication 1 ou 2,
    - activer l'actionneur (11) lors de l'émission d'un ordre de commande de position intermédiaire, jusqu'à ce que le dispositif (17) occupe la position enregistrée dans la mémoire de position intermédiaire.

4.  Procédé selon l'une quelconque des revendications précédentes, caractérisé en ce qu'on détecte et/ou détermine deux positions de référence (FC1, FC2).

5.  Procédé selon l'une quelconque des revendications précédentes, caractérisé en ce que l'une au moins des positions de référence (FC1, FC2) est une position de fin de course.

6.  Procédé selon l'une quelconque des revendications précédentes, caractérisé en ce que deux des positions de référence (FC1, FC2) sont des positions de fin de course.

7.  Procédé selon l'une quelconque des revendications précédentes, caractérisé en ce qu'on détecte les positions de référence (FC1, FC2) grâce à des capteurs de position.

8.  Procédé selon la revendication 6, caractérisé en ce qu'on détecte les positions de référence (FC1, FC2) grâce à des capteurs de fin de course.

9.  Dispositif de commande d'un actionneur (11) permettant le déplacement d'un dispositif de protection solaire, d'occultation ou de fermeture (17), dans une position intermédiaire entre deux positions extrêmes, comprenant un algorithme utilisant des données enregistrées dans des mémoires pour calculer cette position intermédiaire (PI), caractérisé en ce que dans une des mémoires est enregistrée avant l'installation, une donnée de position intermédiaire (DPI) et en ce qu'il comprend un bouton (31) de position intermédiaire sur lequel une action provoque une activation de l'actionneur jusqu'à atteindre la position intermédiaire.

10. Dispositif selon la revendication 9, caractérisé en ce qu'il comprend une unité de commande (30) présentant le bouton de position intermédiaire (31) et en ce que ce bouton de position intermédiaire (31) active un contact commandant à l'actionneur (11) d'amener l'élément de protection solaire, d'occultation ou de fermeture (17) en position intermédiaire (PI) si l'actionneur (11) n'est pas en mouvement et commandant l'arrêt de l'actionneur (11) s'il est en mouvement.

**Claims**

1. Method for the determination of an intermediate position (PI) in a controlling system of an actuator (11) allowing the displacement of a solar protection device, a privacy device or a shutter device (17) between two extreme positions, comprising the following steps:

   - activating the actuator (11) at least once in order to detect and/or to determine one or more reference positions (FC1, FC2) of said device (17), and storing said reference position or, respectively, said reference positions (FC1, FC2) in memories,
   - calculating the intermediate position (PI) with the aid of an algorithm using the reference position or, respectively, the reference positions (FC1, FC2) previously stored, and an intermediate position value (DPI),
   - storing the intermediate position (PI) in a so-called intermediate position memory,

   **characterised in that** the intermediate position value (DPI) is stored in a memory (13) prior to the installation.

2. Method for the determination according to the preceding claim, **characterised in that** the intermediate position value is stored during the manufacturing or the distribution cycle of the device and prior to its installation on site.

3. Method for the control of an actuator (11) allowing the displacement of a solar protection device, privacy device or shutter device (17) into an intermediate position (PI) between two extreme positions, **characterised in that** the method comprises the following steps:

   - carrying out the method of determination according to claim 1 or 2,
   - activating the actuator (11) when an intermediate position control command is emitted, until the device (17) reaches the position stored in the intermediate position memory.

4. Method according to any one of the preceding claims, **characterised in that** two reference positions (FC1, FC2) are detected and/or determined.

5. Method according to any one of the preceding claims, **characterised in that** at least one of the reference positions (FC1, FC2) is a limit stop position.

6. Method according to any one of the preceding claims, **characterised in that** two of the reference positions (FC1, FC2) are limit stop positions.

7. Method according to any one of the preceding claims, **characterised in that** the reference positions (FC1, FC2) are detected with the aid of position sensors.

8. Method according to clam 6, **characterised in that** the reference positions (FC1, FC2) are detected with the aid of limit stop sensors.

9. Control device for an actuator (11) allowing the displacement of a solar protection device, a privacy device or a shutter device (17) into an intermediate position between two extreme positions, comprising an algorithm using the data stored in memories for calculating said intermediate position (PI), **characterised in that** an intermediate position value (DPI) is stored in one of the memories prior to the installation, and that it comprises a intermediate position key (31), an action on that key provoking an activation of the actuator until the intermediate position is reached.

10. Device according to claim 9, **characterised in that** it comprises a control unit (30) heving the intermediate position key (31), and **in that** this intermediate position key (31) activates a contact controlling the actuator (11) for bringing the solar protection device, privacy device or shutter device (17) into an intermediate position (PI) if the actuator (11) is not in motion, and controls the stop of the actuator (11) if it is in motion.

**Patentansprüche**

1. Verfahren zur Ermittlung einer Zwischenstellung (PI) zwischen zwei Endstellungen bei einem System zur Steuerung eines Antriebs (11), der die Verschiebung einer Vorrichtung zum Sonnenschutz, zur Abdunkelung oder zum Schliessen (17) bewirkt, mit den folgenden Schritten:

   - mindestens einmaliges Inbetriebsetzen des Antriebs (11) zwecks Ermittlung und/oder Bestimmung einer bzw. mehrerer Bezugsstellungen (FC1, FC2) der Vorrichtung (17) sowie Speicherung der Bezugsstellung bzw. Bezugsstellungen (FC1, FC2) in Speichervorrichtungen,
   - Berechnen der Zwischenstellung (PI) mit Hilfe eines Algorithmus, bei dem die zuvor gespeicherte(n) Bezugsstellung bzw. Bezugsstellungen (FC1, FC2) sowie ein Wert der Zwischenstellung (DPI) verwendet werden,
   - Speichern der Zwischenstellung (PI) in einer als Zwischenstellungs-Speicher bezeichneten Speichervorrichtung,

   **dadurch gekennzeichnet, dass** der Wert der Zwischenstellung (DPI) vor der Installation in einem Speicher (13) abgelegt wird.

2. Verfahren zur Ermittlung nach vorstehendem Anspruch, **dadurch gekennzeichnet, dass** der Wert der Zwischenstellung im Verlaufe des Herstellungsverfahrens oder des Vertriebs der Vorrichtung und vor deren Installation am Verwendungsort gespeichert wird.

3. Verfahren zur Steuerung eines Antriebs (11), der die Verschiebung einer Vorrichtung zum Sonnenschutz, zur Abdunklung oder zum Schliessen (17) in eine Zwischenstellung (PI) zwischen zwei Endstellungen bewirkt, **dadurch gekennzeichnet, dass** das Verfahren die folgenden Schritte aufweist:

   - Ausführung des Ermittlungsverfahrens gemäss Anspruch 1 oder 2,
   - Einschalten des Antriebs (11) während der Ausgabe eines Steuerbefehls für die Zwischenstellung, bis die Vorrichtung (17) diejenige Stellung eingenommen hat, die im Speicher für diese Zwischenstellung abgelegt ist.

4. Verfahren nach einem der vorstehenden Ansprüche, **dadurch gekennzeichnet, dass** zwei Bezugsstellungen (FC1, FC2) ermittelt und/oder festgelegt werden.

5. Verfahren nach einem der vorstehenden Ansprüche, **dadurch gekennzeichnet, dass** mindestens eine der Bezugsstellungen (FC1, FC2) eine Endstellung ist.

6. Verfahren nach einem der vorstehenden Ansprüche, **dadurch gekennzeichnet, dass** zwei der Bezugsstellungen (FC1, FC2) Endstellungen sind.

7. Verfahren nach einem der vorstehenden Ansprüche, **dadurch gekennzeichnet, dass** die Bezugsstellungen (FC1, FC2) mit Hilfe von Positionsfühlern ermittelt werden.

8. Verfahren nach Anspruch 6, **dadurch gekennzeichnet, dass** die Bezugsstellungen (FC1, FC2) mit Hilfe von Endschaltern ermittelt werden.

9. Vorrichtung zur Steuerung eines Antriebs (11), der die Verschiebung einer Vorrichtung zum Sonnenschutz, zur Abdunkelung oder zum Schliessen (17) in eine Zwischenstellung zwischen zwei Endstellungen bewirkt, wobei ein Algorithmus vorhanden ist, welcher zur Berechnung dieser Zwischenstellung (PI) Daten verwendet, die in Speichervorrichtungen abgelegt sind, **dadurch gekennzeichnet, dass** in einer der Speichervorrichtungen vor der Installation der Vorrichtung ein Wert der Zwischenstellung (DPI) abgelegt ist, und dass die Vorrichtung eine Taste (31) für die Zwischenstellung aufweist, deren Betätigung den Antrieb aktiviert, bis die Zwischenstellung erreicht ist.

10. Vorrichtung nach Anspruch 9, **dadurch gekennzeichnet, dass** sie weiterhin eine Steuereinheit (30) aufweist, welche mit der Taste für die Zwischenstellung (31) versehen ist, und dass diese Taste für die Zwischenstellung (31) einen Kontakt schliesst, welcher den Antrieb (11) dazu veranlasst, das Element zum Sonnenschutz, zur Abdunkelung oder zum Schliessen (17) an die Zwischenstellung (PI) zu bringen, wenn sich der Antrieb (11) nicht in Bewegung befindet, und dass der Kontakt das Anhalten des Antriebs (11) veranlasst, wenn sich dieser Antrieb (11) in Bewegung befindet.

Fig. 1

101 Réglage FC1

102 Calcul PI

103 Appui bouton?

Non

104 bouton 31 ?

Non

105 Rejoindre PI

**Fig. 2**

201 Réglage FC1

202 Réglage FC2

203 Calcul PI

204 Appui bouton ?

Non

205 bouton 31 ?

Non

206 Rejoindre PI

**Fig. 3**

104 bouton 31?

Non

Arrêt ?

Non

105 Rejoindre PI

STOP

**Fig. 4**

**RÉFÉRENCES CITÉES DANS LA DESCRIPTION**

**Documents brevets cités dans la description**

- EP 0426577 A
- EP 0574637 A